# EUROPÄISCHE PATENTSCHRIFT

(11) **EP 3 263 391 B1**
(45) Veröffentlichungstag und Bekanntmachung des Hinweises auf die Patenterteilung: **22.04.2020**
(21) Anmeldenummer: 17177064.7
(22) Anmeldetag: 21.06.2017
(51) Int. Cl.: B60L 5/39, B61F 5/52

(54) **ELASTISCHES TRÄGERSYSTEM FÜR EIN SCHIENENFAHRZEUG**
ELASTIC SUPPORT SYSTEM FOR A RAIL VEHICLE
SYSTÈME DE SUPPORT ÉLASTIQUE POUR VÉHICULE SUR RAIL

(30) Priorität: 30.06.2016 AT 505882016
(43) Veröffentlichungstag der Anmeldung: 03.01.2018
(73) Patentinhaber: Siemens Mobility Austria GmbH, 1210 Wien (AT)
(72) Erfinder: Wechtitsch, Markus, 8501 Lieboch (AT); Sudy, Manfred, 8530 Deutschlandsberg (AT)
(74) Vertreter: Deffner, Rolf

(56) Entgegenhaltungen:
- FR-A1- 2 246 777
- JP-A- S56 121 302
- US-A- 4 526 108
- US-A- 4 546 706

## Beschreibung

Die Erfindung betrifft ein elastisches Trägersystem für ein Schienenfahrzeug mit zumindest einem Wagenkasten und zumindest einem Fahrwerk, wobei das Trägersystem zumindest einen Trägerbalken sowie zumindest einen Adapterarm aufweist und zumindest ein erstes Schwingen-Loslager auf dem Trägerbalken angeordnet ist.

Trägersysteme werden auf dem Gebiet der Schienenfahrzeuge u.a. als Seitenstromabnehmer für U-Bahnen eingesetzt. Seitenstromabnehmer umfassen häufig einen Trägerbalken, auf dem ein Adapterarm mit einem Schleifstück angeordnet ist. In einem aktiven Zustand eines Schienenfahrzeugs, seines Seitenstromabnehmers und einer Bahn-Infrastruktur berührt das Schleifstück eine in einem Gleiskörper, seitlich, links oder rechts neben einem Gleis angeordnete Stromschiene beispielsweise an deren Ober- oder Unterseite und versorgt das Schienenfahrzeug mit Elektrizität.
Der Trägerbalken ist häufig in I-Form oder L-Form ausgeführt und in bekannter Weise auf einem Fahrwerk gelagert, d.h. zwischen dem Trägerbalken und dem Fahrwerk sind ein Festlager und ein Loslager angeordnet. Das Festlager ist in bekannter Ausführung als Gummi-Metall-Lager ausgeführt.
Zwischen der Stromschiene und dem Schleifstück, dem Adapterarm und dem Trägerbalken wirken Kräfte und Drehmomente, die von dem Festlager und dem Loslager aufgenommen werden.
Das Loslager kompensiert insbesondere zwischen seinem Anbauort und jenem des Festlagers auftretende Relativbewegungen.
Das Festlager wird insbesondere mit um eine Längsachse des Trägerbalkens wirkenden Drehmomenten stark belastet.
Der beschriebene Ansatz weist in seiner bekannten Form folglich den Nachteil auf, dass Kippbewegungen des Trägerbalkens auftreten können, welche das Schleifstück gegenüber der Stromschiene verschieben bzw. verdrehen. Dadurch kann ungleichmäßiger Verschleiß des Schleifstücks verursacht werden.
Die Steifigkeit des Festlagers gegen Torsion muss entsprechend groß dimensioniert werden.
Die US 8,348,035 B2 beschreibt eine Andruckvorrichtung für einen Stromabnehmer und offenbart einen Trägerbalken.

Weiterhin ist das US 4,546,706 bekannt, in welchem ein Träger für Komponenten eines Schienenfahrzeugs, z.B. für Stromabnehmer offenbart ist. Der Träger ist für ein innengelagertes Fahrwerk vorgesehen und in einer Weise mit Radsatzlagergehäusen des Fahrwerks verbunden, so dass dieser oberhalb einer Schiene angeordnet ist und einen konstanten Abstand zu dieser Schiene aufweist.

Das US 4,526,108 beschreibt ebenfalls einen Träger für Komponenten wie Seitenstromabnehmer für Schienenfahrzeuge, wobei dieser Träger drehbar auf Radsatzlagergehäusen eines Fahrwerks gelagert ist.

Ferner zeigt die JP S56 121302 A einen federnd und, bis zu definierten Grenzen, beweglich gelagerten Stromabnehmer.

Der Erfindung liegt die Aufgabe zugrunde, ein gegenüber dem Stand der Technik verbessertes Trägersystem anzugeben.

Erfindungsgemäß wird diese Aufgabe gelöst mit einem elastischen Trägersystem der eingangs genannten Art,
bei dem ein erstes elastisches Lager auf einer ersten Seite einer Trägerebene einer Trägerbalken-Längsachse auf dem Trägerbalken, ein zweites elastisches Lager auf einer der ersten Seite der Trägerebene gegenüberliegenden, zweiten Seite auf dem Trägerbalken und das zumindest erste Schwingen-Loslager an einer von Punkten auf einer Verbindungsgeraden zwischen dem ersten elastischen Lager und dem zweiten elastischen Lager verschiedenen Position auf dem Trägerbalken angeordnet ist.
Dadurch wird eine günstige Stabilität des Trägersystems auf seinem Anbauort erzielt. Drehmomente um die Trägerbalken-Längsachse werden, je nach Lagertyp und -Anordnung, von den radialen oder axialen Steifigkeiten des ersten elastischen Lagers und des zweiten elastischen Lagers aufgenommen.
Das erste elastische Lager und das zweite elastische Lager werden insbesondere hinsichtlich Torsion entlastet und können entsprechend kompakt ausgeführt werden.
Das Risiko von Kippbewegungen des Trägerbalkens um die Trägerbalken-Längsachse wird reduziert. Ist das Trägersystem als Seitenstromabnehmer ausgeführt und ist auf dem Adapterarm ein Stromabnehmer-Schleifstück angeordnet, so wird ungleichmäßiger Verschleiß dieses Stromabnehmer-Schleifstücks vermindert.
Folglich werden eine Streckung von Wartungsintervallen und eine Reduktion von Wartungskosten erzielt.

Es ist günstig, wenn das erste Schwingen-Loslager und ein zweites Schwingen-Loslager auf einem zweiten Flansch des Trägerbalkens angeordnet sind.
Durch diese Maßnahme wird die Verwindung des Trägerbalkens aufgrund von Drehmomenten um die Trägerbalken-Längsachse, welche in dem Trägerbalken Torsionsspannungen verursachen, reduziert.

Eine vorteilhafte Lösung erhält man, wenn der Trägerbalken auf einer nicht gefederten Ebene des zumindest einen Fahrwerks angeordnet ist.
Durch diese Maßnahme führt das Trägersystem nur die im Vergleich zu einer primär oder sekundär gefederten Ebene des Fahrwerks für gewöhnlich geringeren Bewegungen der nicht gefederten Ebene aus. Dadurch werden, wenn das Trägersystem als Seitenstromabnehmer ausgeführt ist und auf dem Adapterarm ein Stromabnehmer-Schleifstück angeordnet ist, Abweichungen von einem Soll-Abstand zwischen dem Stromabnehmer-Schleifstück und einer Stromschiene verringert und andererseits die Gefahr von Verletzungen des Lichtraumprofils durch das Trägersystem gesenkt.

Nachfolgend wird die Erfindung anhand von Ausführungsbeispielen näher erläutert.

Es zeigen beispielhaft:
- Fig. 1:: Eine schematische, nicht maßstäbliche Darstellung einer ersten beispielhaften Ausführung eines erfindungsgemäßen Trägersystems mit einem T-förmigen Trägerbalken,
- Fig. 2:: Eine schematische, nicht maßstäbliche Darstellung einer zweiten beispielhaften Ausführung eines erfindungsgemäßen Trägersystems mit einem Doppel-T-förmigen Trägerbalken,
- Fig. 3:: Eine Seitenansicht eines Fahrwerks mit einem Trägerbalken einer beispielhaften Ausführung eines erfindungsgemäßen Trägersystems, und
- Fig. 4:: Eine Schnittdarstellung einer beispielhaften Ausführung eines erfindungsgemäßen Trägersystems, wobei ein erstes elastisches Lager und ein zweites elastisches Lager auf einem Trägerbalken gezeigt werden.

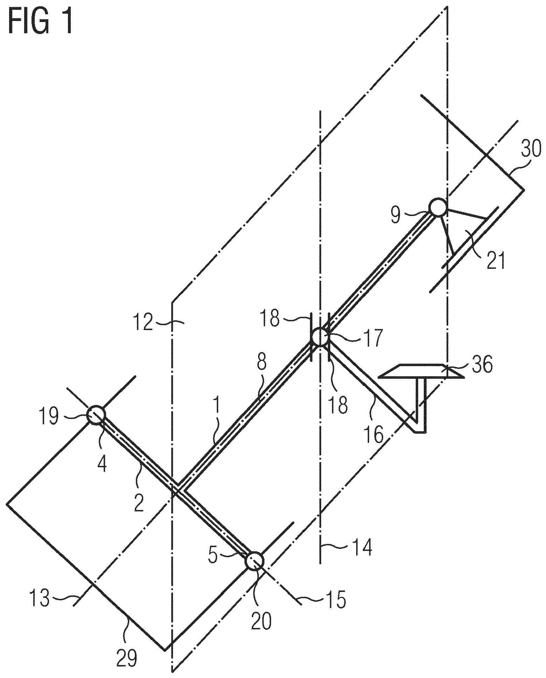

Ein in Fig. 1 dargestelltes Schema zeigt eine erste beispielhafte Variante eines erfindungsgemäßen Trägersystems für ein Schienenfahrzeug.
Das Trägersystem ist als Seitenstromabnehmer ausgeführt und umfasst einen Trägerbalken 1 und einen Adapterarm 16.
Der Trägerbalken 1 ist in Form eines T-Trägers ausgebildet. Ein erster Flansch 2 des Trägerbalkens 1 weist ein erstes elastisches Lager 19 und ein zweites elastisches Lager 20 auf.
Das erste elastische Lager 19 ist auf einer ersten Seite einer Trägerebene 12 einer Trägerbalken-Längsachse 13 auf einem ersten Flanschende 4, das zweite elastische Lager 20 auf einer der ersten Seite der Trägerebene 12 gegenüberliegenden, zweiten Seite auf einem zweiten Flanschende 5 angeordnet.

Das erste elastische Lager 19 und das zweite elastische Lager 20 werden insbesondere durch Drehmomente belastet. Beispielsweise werden Kippmomente des Trägerbalkens 1 von den radialen Steifigkeiten des ersten elastischen Lagers 19 und des zweiten elastischen Lagers 20 aufgenommen. Der Abstand des ersten elastischen Lagers 19 und des zweiten elastischen Lagers 20 von der Trägerbalken-Längsachse 13 bzw. die Länge des ersten Flansches 2 ist in einer Weise dimensioniert, dass Kippeffekte des Trägerbalkens 1 um die Trägerbalken-Längsachse 13 möglichst stark reduziert werden.

Ein Steg 8 umfasst ein Stegende 9 mit einem ersten Schwingen-Loslager 21, d.h. das erste Schwingen-Loslager 21 ist an einer von Punkten auf einer Verbindungsgerade 15 zwischen dem ersten elastischen Lager 19 und dem zweiten elastischen Lager 20 verschiedenen Position angeordnet.
Das erste Schwingen-Loslager 21 weist einen Freiheitsgrad der Translation auf, wodurch eine Verschiebung des Trägerbalkens 1 in Richtung der Trägerbalken-Längsachse 13 möglich ist.

Somit bewirkt das erste Schwingen-Loslager 21 insbesondere eine Kompensation von Relativbewegungen zwischen seinem Anbauort sowie den Anbauorten des ersten elastischen Lagers 19 und des zweiten elastischen Lagers 20.

Das erste elastische Lager 19 und das zweite elastische Lager 20 sind mit einer U-förmigen ersten Konsole 29 lösbar verbunden, das erste Schwingen-Loslager 21 mit einer L-förmigen zweiten Konsole 30. Die erste Konsole 29 und die zweite Konsole 30 sind mit einem in Fig. 1 nicht gezeigten Fahrwerk 37 verschraubt.

Der Adapterarm 16 ist L-förmig ausgeführt und über ein Drehgelenk 17, eine Führung 18 sowie ein nicht gezeigtes Federsystem mit dem Steg 8 des Trägerbalkens 1 verbunden. Das Drehgelenk 17 ermöglicht eine Rotation des Adapterarms 16 um eine Trägerbalken-Längsachse 13, die Führung 18 eine Verschiebung des Adapterarms 16 parallel zu einer Trägerbalken-Hochachse 14. Das Federsystem ermöglicht nach einer Auslenkung des Adapterarms 16 dessen Rückführung in eine Ausgangsposition und -Lage.

Auf einem parallel zu einer Trägerbalken-Hochachse 14 verlaufenden Adapterflansch ist ein vertikal nach oben gerichtetes Stromabnehmer-Schleifstück 36 angeordnet. Das Stromabnehmer-Schleifstück 36 berührt in einem aktiven Zustand des Seitenstromabnehmers eine Unterseite einer nicht dargestellten, in einem Gleiskörper seitlich neben einem Gleis 47 angeordneten Stromschiene. Dadurch werden Kräfte und Momente in das Stromabnehmer-Schleifstück 36 eingeleitet und über den Adapterarm 16 auf den Trägerbalken 1 und das erste elastische Lager 19, das zweite elastische Lager 20 sowie das erste Schwingen-Loslager 21 übertragen.
Das Drehgelenk 17, die Führung 18 und das nicht dargestellte Federsystem ermöglichen eine Anpassung von Position und Orientierung des Adapterarms 16 und des Stromabnehmer-Schleifstücks 36 hinsichtlich auftretender Relativbewegungen zwischen dem Stromabnehmer-Schleifstück 36 und der Stromschiene.

Bei der Anordnung und Ausrichtung des Adapterarms 16 und des Stromabnehmer-Schleifstücks 36 auf dem Trägerbalken 1 handelt es sich um eine günstige Lösung.
Erfindungsgemäß ist es jedoch beispielsweise auch vorstellbar, dass der Adapterarm 16 und das Stromabnehmer-Schleifstück 36 nach unten weisen und die Stromschiene an deren Oberseite berühren.
Weiterhin ist es auch denkbar, dass auf dem Adapterarm 16 ein Anschließteil für einen Kurzschließer vorgesehen ist. Mittels Kurzschließern kann das Abschalten von Stromschienen erzwungen und folglich eine Unfallgefahr durch elektrischen Strom für Personen, die sich in einer Gleisanlage aufhalten, reduziert werden.

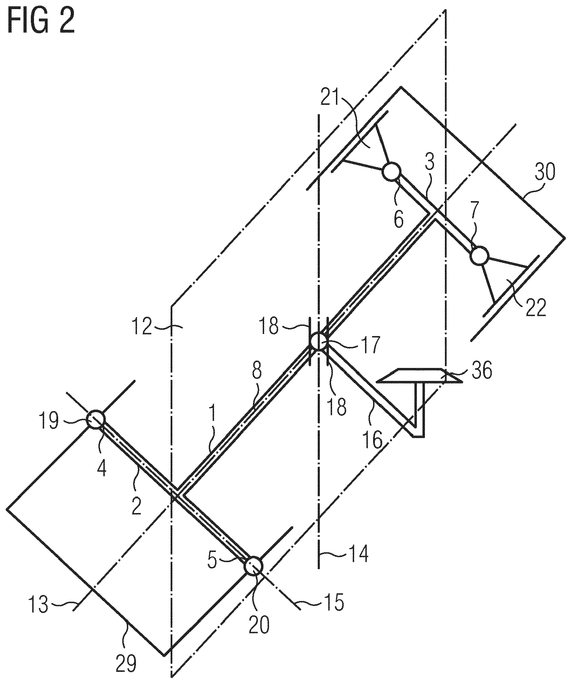

Fig. 2 zeigt ein Schema einer zweiten beispielhaften Ausführungsvariante eines erfindungsgemäßen Trägersystems.
Im Unterschied zu Fig. 1 ist ein Trägerbalken 1 als Doppel-T-Träger ausgebildet, d.h. der Trägerbalken 1 umfasst einen ersten Flansch 2 und einen zweiten Flansch 3, die über einen Steg 8 miteinander verbunden sind.
Auf dem ersten Flansch 2 sind ein erstes elastisches Lager 19 und ein zweites elastisches Lager 20 angeordnet.
Der zweite Flansch 3 weist auf einem dritten Flanschende 6 ein erstes Schwingen-Loslager 21 und auf und einem vierten Flanschende 7 ein zweites Schwingen-Loslager 22 auf.
Der Abstand des ersten Schwingen-Loslagers 21 und des zweiten Schwingen-Loslagers 22 von einer Trägerbalken-Längsachse 13 bzw. die Länge des zweiten Flansches 3 ist in einer Weise dimensioniert, dass sich eine möglichst große Stabilität und eine möglichst geringe Verwindung des Trägerbalkens 1 ergeben.

Das erste elastische Lager 19 und das zweite elastische Lager 20 sind mit einer ersten Konsole 29, das erste Schwingen-Loslager 21 und das zweite Schwingen-Loslager 22 mit einer zweiten Konsole 30 lösbar verbunden. Die erste Konsole 29 und die zweite Konsole 30 sind U-förmig ausgebildet und mit einem in Fig. 2 nicht gezeigten Fahrwerk 37 verschraubt.
Im Übrigen entsprechen das konstruktive Prinzip und die gewählten Bezugszeichen jener Ausführungsvariante, die in Fig. 1 dargestellt wird.

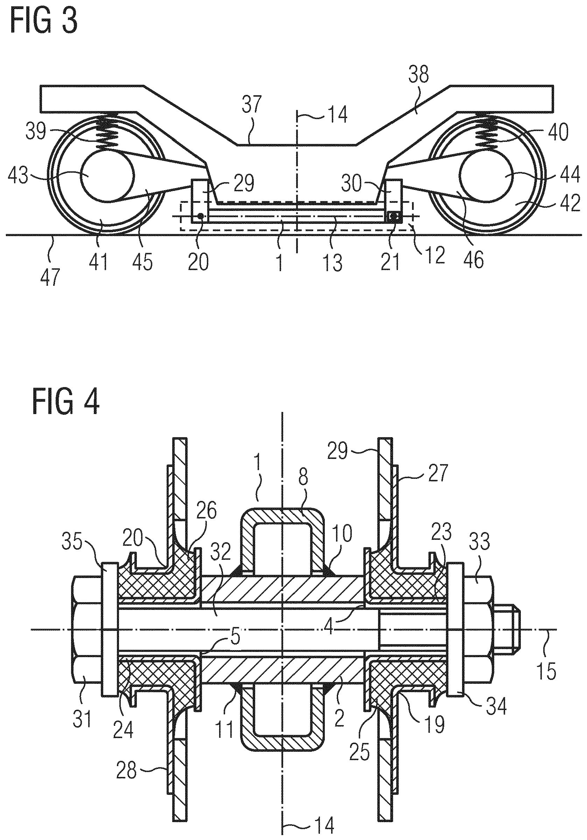

In Fig. 3 wird eine Längsseite eines Fahrwerks 37 mit einem Trägerbalken 1 eines erfindungsgemäßen Trägersystems gezeigt. Das Fahrwerk 37 stützt sich über einen ersten Radsatz 41 und einen zweiten Radsatz 42 auf einem Gleis 47 ab.
Über eine erste Primärfeder 39 sowie eine nicht sichtbare dritte Primärfeder ist der erste Radsatz 41 und über eine zweite Primärfeder 40 sowie eine nicht sichtbare vierte Primärfeder der zweite Radsatz 42 mit einem Fahrwerksrahmen 38 verbunden.
Der erste Radsatz 41 ist über ein nicht sichtbares erstes und drittes Radsatzlager auf einer ebenfalls nicht gezeigten ersten Radsatzwelle gelagert. Auf dem ersten Radsatzlager ist ein erstes Radsatzlagergehäuse 43 mit einem ersten Schwingarm 45 drehbar um die erste Radsatzwelle angeordnet.
Der erste Schwingarm 45 ist mit einer auf dem Fahrwerksrahmen 38 gelagerten, nicht dargestellten ersten Radsatzführungsbuchse gelenkig verbunden.
Der zweite Radsatz 42 ist über ein nicht sichtbares zweites und viertes Radsatzlager auf einer ebenfalls nicht gezeigten zweiten Radsatzwelle gelagert. Auf dem zweiten Radsatzlager ist ein zweites Radsatzlagergehäuse 44 mit einem zweiten Schwingarm 46 drehbar um die zweite Radsatzwelle angeordnet. Der zweite Schwingarm 46 ist mit einer auf dem Fahrwerksrahmen 38 gelagerten, nicht dargestellten zweiten Radsatzführungsbuchse gelenkig verbunden.

Mit dem ersten Schwingarm 45 ist eine erste Konsole 29 verschraubt, mit dem zweiten Schwingarm 46 eine zweite Konsole 30. Der Trägerbalken 1 ist mit der ersten Konsole 29 über ein in Fig. 3 nicht sichtbares erstes elastisches Lager 19 und ein zweites elastisches Lager 20 sowie mit der zweiten Konsole 30 über ein erstes Schwingen-Loslager 21 verbunden. Insbesondere über das erste Schwingen-Loslager 21 erfolgt ein Ausgleich von Relativbewegungen zwischen dem ersten Schwingarm 45, dem zweiten Schwingarm 46 und dem Trägersystem.
Der erste Schwingarm 45 und der zweite Schwingarm 46 werden einer nicht gefederten Ebene des Fahrwerks 37 zugerechnet, somit zählt das Trägersystem auch zu dieser nicht gefederten Ebene.
Auf die Darstellung eines Adapterarms 16, eines Stromabnehmer-Schleifstücks 36 etc. auf dem Trägerbalken 1 wurde in Fig. 3 verzichtet.
Im Übrigen entspricht das gezeigte Trägersystem jenem Schema, das z.B. in Fig. 1 dargestellt ist.

Fig. 4 zeigt eine Schnittdarstellung einer beispielhaften Ausführung eines erfindungsgemäßen, entsprechend dem z.B. in Fig. 1 dargestellten Schema ausgeführten Trägersystems.
Die Schnittebene ist durch eine Verbindungsgerade 15 und eine Parallele zu einer Trägerbalken-Hochachse 14 definiert und verläuft durch einen ersten Flansch 2 eines Trägerbalkens 1. Die Blickrichtung verläuft von einer z.B. in Fig. 1 gezeigten zweiten Konsole 30 zu einer ebenfalls z.B. in Fig. 1 dargestellten ersten Konsole 29.
Der Trägerbalken 1 weist einen als Vierkant-Hohlprofil ausgeführten Steg 8 und einen als Rohr mit kreisförmigem Querschnitt ausgeführten ersten Flansch 2 auf.
Der Steg 8 ist über eine Schweißverbindung mit einer als Kehlnaht ausgeführten ersten Schweißnaht 10 und einer ebenfalls als Kehlnaht ausgeführten zweiten Schweißnaht 11 mit dem ersten Flansch 2 verbunden.

An einem ersten Flanschende 4 ist ein erstes elastisches Lager 19 und an einem zweiten Flanschende 5 ein zweites elastisches Lager 20 angeordnet.
Das erste elastische Lager 19 und das zweite elastische Lager 20 sind als zylindrische Gummi-Metall-Lager mit kreisringförmigen Grundflächen ausgeführt.
Das erste elastische Lager 19 weist eine innenliegende, metallische erste Lagerbuchse 23 und eine außenliegende, metallische erste Lagerhülse 27 auf. Zwischen der ersten Lagerbuchse 23 und der ersten Lagerhülse 27 ist ein erstes Gummielement 25 vorgesehen.
Das zweite elastische Lager 20 weist eine innenliegende, metallische zweite Lagerbuchse 24 und eine außenliegende, metallische zweite Lagerhülse 28 auf. Zwischen der zweiten Lagerbuchse 24 und der zweiten Lagerhülse 28 ist ein zweites Gummielement 26 vorgesehen.

Über eine erste Konsole 29 sind das erste elastische Lager 19 und das zweite elastische Lager 20 bzw. das Trägersystem mit einem in Fig. 4 nicht gezeigten Fahrwerk 37 verbunden. Mittels einer Schraubenverbindung 31 sind der Trägerbalken 1, das erste elastische Lager 19, das zweite elastische Lager 20 und die erste Konsole 29 miteinander verspannt.
Die Schraubenverbindung 31 umfasst eine Durchgangsschraube 32, die durch das erste elastische Lager 19, das zweite elastische Lager 20 sowie den ersten Flansch 2 geführt ist. In einem Bereich des ersten elastischen Lagers 19 sind auf der Durchgangsschraube 32 eine erste Scheibe 34 sowie eine Schraubenmutter 33 angeordnet, in einem Bereich des zweiten elastischen Lagers 20 ist auf der Durchgangsschraube 32 eine zweite Scheibe 35 vorgesehen.

Ein über den Steg 8 übertragenes Drehmoment um eine z.B. in Fig. 1 dargestellte und in Fig. 4 projizierend erscheinende Trägerbalken-Längsachse 13 wirkt als Kräftepaar in Richtung der Trägerbalken-Hochachse 14 auf das erste elastische Lager 19 und das zweite elastische Lager 20.
Eine erste Kraft dieses Kräftepaars wird über die radiale Steifigkeit des ersten elastischen Lagers 19 aufgenommen, eine der ersten Kraft entgegengesetzt gerichtete zweite Kraft des Kräftepaars über die radiale Steifigkeit des zweiten elastischen Lagers 20.

### Liste der Bezeichnungen

- 1: Trägerbalken
- 2: Erster Flansch
- 3: Zweiter Flansch
- 4: Erstes Flanschende
- 5: Zweites Flanschende
- 6: Drittes Flanschende
- 7: Viertes Flanschende
- 8: Steg
- 9: Stegende
- 10: Erste Schweißnaht
- 11: Zweite Schweißnaht
- 12: Trägerebene
- 13: Trägerbalken-Längsachse
- 14: Trägerbalken-Hochachse
- 15: Verbindungsgerade
- 16: Adapterarm
- 17: Drehgelenk
- 18: Führung
- 19: Erstes elastisches Lager
- 20: Zweites elastisches Lager
- 21: Erstes Schwingen-Loslager
- 22: Zweites Schwingen-Loslager
- 23: Erste Lagerbuchse
- 24: Zweite Lagerbuchse
- 25: Erstes Gummielement
- 26: Zweites Gummielement
- 27: Erste Lagerhülse
- 28: Zweite Lagerhülse
- 29: Erste Konsole
- 30: Zweite Konsole
- 31: Schraubenverbindung
- 32: Durchgangsschraube
- 33: Schraubenmutter
- 34: Erste Scheibe
- 35: Zweite Scheibe
- 36: Stromabnehmer-Schleifstück
- 37: Fahrwerk
- 38: Fahrwerksrahmen
- 39: Erste Primärfeder
- 40: Zweite Primärfeder
- 41: Erster Radsatz
- 42: Zweiter Radsatz
- 43: Erstes Radsatzlagergehäuse
- 44: Zweites Radsatzlagergehäuse
- 45: Erster Schwingarm
- 46: Zweiter Schwingarm
- 47: Gleis

## Patentansprüche

1. Elastisches Trägersystem für ein Schienenfahrzeug mit zumindest einem Wagenkasten und zumindest einem Fahrwerk (37), wobei das Trägersystem zumindest einen Trägerbalken (1) sowie zumindest einen Adapterarm (16) aufweist, wobei zumindest ein erstes Schwingen-Loslager (21) auf dem Trägerbalken (1) angeordnet ist, **dadurch gekennzeichnet, dass** ein erstes elastisches Lager (19) auf einer ersten Seite einer Trägerebene (12) einer Trägerbalken-Längsachse (13) auf dem Trägerbalken (1), ein zweites elastisches Lager (20) auf einer der ersten Seite der Trägerebene (12) gegenüberliegenden, zweiten Seite auf dem Trägerbalken (1) und das zumindest erste Schwingen-Loslager (21) an einer von Punkten auf einer Verbindungsgeraden (15) zwischen dem ersten elastischen Lager (19) und dem zweiten elastischen Lager (20) verschiedenen Position auf dem Trägerbalken (1) angeordnet ist.

2. Elastisches Trägersystem nach Anspruch 1, **dadurch gekennzeichnet, dass** der Trägerbalken (1) T-förmig ausgebildet ist.

3. Elastisches Trägersystem nach Anspruch 1, **dadurch gekennzeichnet, dass** der Trägerbalken (1) Doppel-T-förmig ausgebildet ist.

4. Elastisches Trägersystem nach Anspruch 2 oder 3, **dadurch gekennzeichnet, dass** das erste elastische Lager (19) und das zweite elastische Lager (20) auf einem ersten Flansch (2) des Trägerbalkens (1) angeordnet sind.

5. Elastisches Trägersystem nach Anspruch 2, **dadurch gekennzeichnet, dass** das erste Schwingen-Loslager (21) auf einem Steg (8) des Trägerbalkens (1) angeordnet ist.

6. Elastisches Trägersystem nach Anspruch 3, **dadurch gekennzeichnet, dass** das erste Schwingen-Loslager (21) und ein zweites Schwingen-Loslager (22) auf einem zweiten Flansch (3) des Trägerbalkens (1) angeordnet sind.

7. Elastisches Trägersystem nach Anspruch 1, **dadurch gekennzeichnet, dass** der Trägerbalken (1) auf dem zumindest einen Fahrwerk (37) angeordnet ist.

8. Elastisches Trägersystem nach Anspruch 7, **dadurch gekennzeichnet, dass** der Trägerbalken (1) auf einer nicht gefederten Ebene des zumindest einen Fahrwerks (37) angeordnet ist.

9. Elastisches Trägersystem nach Anspruch 1, **dadurch gekennzeichnet, dass** auf dem Adapterarm (16) ein Stromabnehmer-Schleifstück (36) angeordnet ist.

10. Elastisches Trägersystem nach Anspruch 1, **dadurch gekennzeichnet, dass** auf dem Adapterarm (16) zumindest ein Anschließteil für einen Kurzschließer angeordnet ist.

## Claims

1. Resilient support system for a rail vehicle with at least one vehicle body and at least one bogie (37), wherein the support system has at least one support beam (1) and at least one adapter arm (16), wherein at least one first swinging floating bearing (21) is arranged on the support beam (1), **characterised in that** a first resilient bearing (19) is arranged on a first side of a support plane (12) of a support beam longitudinal axis (13) on the support beam (1), a second resilient bearing (20) is arranged on a second side opposite the first side of the support plane (12) on the support beam (1) and the at least first swinging floating bearing (21) is arranged at a position on the support beam (1) which is different from points on a connecting straight line (15) between the first resilient bearing (19) and the second resilient bearing (20).

2. Resilient support system according to claim 1, **characterised in that** the support beam (1) is embodied in a T-shaped manner.

3. Resilient support system according to claim 1, **characterised in that** the support beam (1) is embodied in a double T-shaped manner.

4. Resilient support system according to claim 2 or 3, **characterised in that** the first resilient bearing (19) and the second resilient bearing (20) are arranged on a first flange (2) of the support beam (1).

5. Resilient support system according to claim 2, **characterised in that** the first swinging floating bearing (21) is arranged on a web (8) of the support beam (1).

6. Resilient support system according to claim 3, **characterised in that** the first swinging floating bearing (21) and a second swinging floating bearing (22) are arranged on a second flange (3) of the support beam (1).

7. Resilient support system according to claim 1, **characterised in that** the support beam (1) is arranged on the at least one bogie (37).

8. Resilient support system according to claim 7, **characterised in that** the support beam (1) is arranged on an unsprung plane of the at least one bogie (37).

9. Resilient support system according to claim 1, **characterised in that** a current collector contact shoe (36) is arranged on the adapter arm (16).

10. Resilient support system according to claim 1, **characterised in that** at least one connection part for a short-circuiter is arranged on the adapter arm (16).

## Revendications

1. Système de support élastique pour véhicule sur rails comprenant au moins une caisse de wagon et au moins un train de roulement (37), dans lequel le système de support comprend au moins une poutre de support (1) ainsi qu'au moins un bras adaptateur (16), dans lequel au moins un premier palier libre oscillant (21) est situé sur la poutre de support (1),
**caractérisé en ce qu'**un premier palier élastique (19) est situé sur un premier côté d'un plan de support (12) d'un axe longitudinal de poutre de support (13) sur la poutre de support (1), un second palier élastique (20) est situé sur un second côté, opposé au premier côté du plan de support (12), sur la poutre de support (1), et l'au moins un premier palier libre oscillant (21) est situé à une position sur la poutre de support (1) qui est distincte de points situés sur une droite de liaison (15) entre le premier palier élastique (19) et le second palier élastique (20).

2. Système de support élastique selon la revendication 1, **caractérisé en ce que** la poutre de support (1) est en forme de T.

3. Système de support élastique selon la revendication 1, **caractérisé en ce que** la poutre de support (1) est en forme de double T.

4. Système de support élastique selon la revendication 2 ou 3, **caractérisé en ce que** le premier palier élastique (19) et le second palier élastique (20) sont situés sur une première aile (2) de la poutre de support (1).

5. Système de support élastique selon la revendication 2, **caractérisé en ce que** le premier palier libre oscillant (21) est situé sur une âme (8) de la poutre de support (1).

6. Système de support élastique selon la revendication 3, **caractérisé en ce que** le premier palier libre oscillant (21) et un second palier libre oscillant (22) sont situés sur une seconde aile (3) de la poutre de support (1).

7. Système de support élastique selon la revendication 1, **caractérisé en ce que** la poutre de support (1) est située sur l'au moins un train de roulement (37).

8. Système de support élastique selon la revendication 7, **caractérisé en ce que** la poutre de support (1) est située sur un plan non amorti de l'au moins un train de roulement (37).

9. Système de support élastique selon la revendication 1, **caractérisé en ce qu'**un frotteur d'appareil de prise de courant (36) est situé sur le bras adaptateur (16).

10. Système de support élastique selon la revendication 1, **caractérisé en ce qu'**au moins une pièce de connexion pour un court-circuiteur est située sur le bras adaptateur (16).
